# NOUVEAU FASCICULE DE BREVET EUROPEEN

(11) **EP 1 862 347 B2**
(45) Date de publication et mention de la décision concernant l'opposition: **17.06.2020**
(45) Mention de la délivrance du brevet: 23.08.2017
(21) Numéro de dépôt: 07290653.0
(22) Date de dépôt: 22.05.2007
(51) Int. Cl.: B60L 5/32

(54) **Système et procédé de commande d'un pantographe**
System und Verfahren zur Steuerung eines Pantographen
Control system and method for a pantograph

(30) Priorité: 29.05.2006 FR 0651939
(43) Date de publication de la demande: 05.12.2007
(73) Titulaire: FAIVELEY TRANSPORT, 93200 Saint Denis (FR)
(72) Inventeur: Blanvillain, Gérard, 37270 Veretz (FR)
(74) Mandataire: Novagraaf Technologies

(56) Documents cités:
- DE-A1- 3 124 849
- DE-A1- 10 126 042
- FR-A- 1 400 376

## Description

La présente invention concerne le domaine des commandes pneumatiques d'un pantographe destiné à l'alimentation d'un engin ferroviaire ou d'un véhicule électrique alimenté par un système de caténaire.

### État de la technique

Le pantographe, décrit par exemple dans le brevet européen EP395504 de la demanderesse, comporte une tête de captage, palette venant en contact électrique frottant avec le fil de contact conducteur de courant d'un système de caténaire avec une force d'application, par l'intermédiaire d'un équipement électropneumatique contenant un moyen de commande de pression pneumatique destiné à la régulation d'une pression d'entraînement qui est transmise à un moyen d'application pouvant être réglé par voie pneumatique du pantographe, et à l'aide duquel la force d'application peut être réglée à une valeur de consigne prédéterminée.

Le document EP 0 989 015 décrit une régulation de force d'application sous une forme connue en matière de pantographes ferroviaires, l'adaptation à la position en hauteur du pantographe étant effectuée par une pression de vérin variable mais, de la manière connue par l'intermédiaire d'un disque à came situé au niveau de la base de la structure. Toutes les autres vannes servent uniquement aux nécessités spécifiques au Bus 0 et n'ont pas d'incidence sur la commande de la force de contact.

En fonction du type du système de caténaire, et notamment du fil de contact, l'exploitant du réseau, qui met entre autres à disposition le système de caténaire, prescrit des valeurs limites pour la force de contact avec laquelle la tête du pantographe est appliquée contre le système de caténaire. Une valeur limite inférieure doit par exemple définir une force minimale afin d'assurer une alimentation en courant qui est dans une large mesure ininterrompue, alors que la valeur limite supérieure est en premier lieu prescrite afin de protéger le système de caténaire contre une usure excessive, mais également contre une surcharge mécanique. Le respect de ces valeurs limites est assuré lors du fonctionnement afin de ne pas mettre en danger la sécurité contre des contraintes excessives, et de maintenir l'usure, notamment du fil de contact et de sa suspension, dans des limites acceptables. Pour la justification du respect des valeurs limites mentionnées, ainsi que pour la vérification des dispositifs servant à atteindre ces valeurs limites au niveau du véhicule, y compris du pantographe, ainsi que pour déterminer des mesures de correction qui sont le cas échéant nécessaires, de nombreux parcours d'essai coûteux des véhicules moteurs concernés sont effectués dans la pratique.

Il est connu par le brevet français FR2809683 de réaliser une commande destinée à au moins un pantographe actionne par voie pneumatique d'un véhicule moteur électrique, comportant une tête pouvant être appliquée contre un système de caténaire par une force d'application, contenant un moyen de commande de pression pneumatique pour la régulation d'une pression d'entraînement qui est transmise à un moyen d'application pouvant être réglé par voie pneumatique du pantographe, et à l'aide duquel force d'application peut être réglée à une valeur de consigne prédéterminée, caractérisée en ce que il est prévu un dispositif pilote, génère un signal pilote sur la base d'au moins une grandeur d'entrée dépendant dans le temps de l'état de fonctionnement et/ou de marche du véhicule moteur, et en ce que le signal pilote est transmis au moyen de commande de pression en tant que signal valeur de consigne.

On connaît également dans l'art antérieur le brevet allemand DE10118608 décrivant un procédé de contrôle de la force de contact d'un pantographe, par une pression ajustable.

On connaît également le brevet FR-1400376 de la Demanderesse décrivant un système de perfectionnement de pantographe permettant d'ajouter un effort supplémentaire (distinct de l'ajustement de l'effort sur la caténaire) à l'effort statique (tarage). Le système comprend, outre des ressorts statiques, un ensemble pneumatique piloté par un relais électronique pour actionner une bielle exerçant l'effort supplémentaire du pantographe. Le relais électronique reçoit en entrée un premier signal fonction de la vitesse du train et un second signal fonction de la pression à l'intérieur dudit ensemble pneumatique. Dans ce système, aucun coussin pneumatique actionnant le pantographe n'est prévu et le second moyen d'ajustement pneumatique agit directement sur un système de bielle du pantographe. Il en résulte une précision moindre dans la commande du pantographe.

Il est également connu, du document DE-10126042, un système de pantographe actionné par un soufflet pneumatique BG pour exercer une pression sur la caténaire. La pression à l'intérieur du soufflet est régulée par une vanne de commande électropneumatique EP, laquelle reçoit un signal pilote comme signal de valeur de consigne. Le signal pilote est de type électrique et généré par une unité électronique C en fonction de signaux de mesures tels que la pression exercée sur la caténaire, la vitesse du train, ... Dans ce système, il n'est pas prévu de premier moyen d'ajustement mécanique, il n'est pas prévu que le second moyen d'ajustement de la valeur de tarage du régulateur est de type pneumatique ni que le circuit électronique de pilotage reçoit un signal de mesure de la pression au niveau du coussin. Il en résulte une précision moindre dans la commande du pantographe.

### Problème posé par l'état de la technique

Le pilotage électropneumatique des pantographes prend en compte les configurations de la rame (vitesse, sens, configuration simple ou multirame ...) et du type de caténaire (en fonction du pays, ...) pour commander la force d'appui. Il agit directement sur le circuit de puissance pneumatique et modifie la pression en ouvrant en tout ou rien des vannes.

Le problème qui se pose avec les équipements selon l'état de la technique est celui de la fiabilité et de la précision de la commande du pantographe. En effet, il est important, pour un matériel ferroviaire, que la permanence du service soit assurée, éventuellement de manière dégradée, même en cas de défaillance de la commande du pantographe.

Par ailleurs, la régulation sur le circuit de puissance est difficile à assurer et se révèle consommateur d'énergie. Or, dans l'art antérieur, les vannes agissent directement sur le circuit pneumatique de puissance.

### Solution apportée par l'invention

Le but de l'invention est de proposer une solution améliorée, assurant un fonctionnement de secours en cas de panne de la commande de pilotage. L'invention consiste à mettre en œuvre un régulateur de pression dont la pression varie en fonction d'une consigne. La consigne est déterminée par une pression basse pneumatique, permettant une régulation précise.

À cet effet, l'invention concerne un système selon la revendication 1.

Selon cette invention, le circuit de commande fournit un réglage d'offset piloté pneumatiquement par rapport à un tarage mécanique, réglé lors de la mise en service de l'équipement roulant, ou lors de visites périodiques. En cas de défaillance du circuit de commande, la valeur de tarage est la valeur fixée par le premier moyen d'ajustement mécanique seulement correspondant, ajustée à la valeur nominale déterminée pour une vitesse de rame nulle.

Dans une configuration possible à l'arrêt, la partie de commande est à pression nulle, et le réglage est celui résultant du tarage initial effectué manuellement, par action sur une vis de réglage agissant sur la membrane.

Selon un mode de réalisation avantageux, la commande de la valeur d'ajustement est assurée par deux électrovalves commandées par ledit circuit électronique pour commander pneumatiquement ledit second moyen d'ajustement.

Selon une variante particulière, le circuit électronique reçoit en outre une information provenant de la rame ou du réseau, en particulier :
- des signaux de géolocalisation (pour détecter les tunnels),
- des signaux d'information climatique (température, humidité, ...).

Selon un mode de réalisation particulier, le circuit commande deux pantographes en fonctionnement alternatif.

L'invention concerne également un procédé de commande d'un pantographe selon la revendication 7.

### Exemple non limitatif de réalisation

L'invention sera mieux comprise à la lecture de la description qui suit, concernant un exemple non limitatif de réalisation se référant aux dessins annexés où :
- la figure 1 représente le schéma de principe d'un module de régulation connu ;
- la figure 2 représente le schéma de principe d'un module de pilotage selon une première variante de l'invention ;
- la figure 3 représente le schéma de principe d'un module de pilotage selon une deuxième variante de l'invention.

Le système selon l'invention comprend un module de régulation standard dont l'élément essentiel est un régulateur gros débit de précision auquel on ajoute un module de pilotage (pneumatique + électronique).

En fonctionnement normal, les 2 modules pneumatiques sont opérationnels. En cas de non fonctionnement du module de pilotage, le module de régulation standard reste opérationnel. Il assure, en secours un fonctionnement en mode dégradé du pantographe.

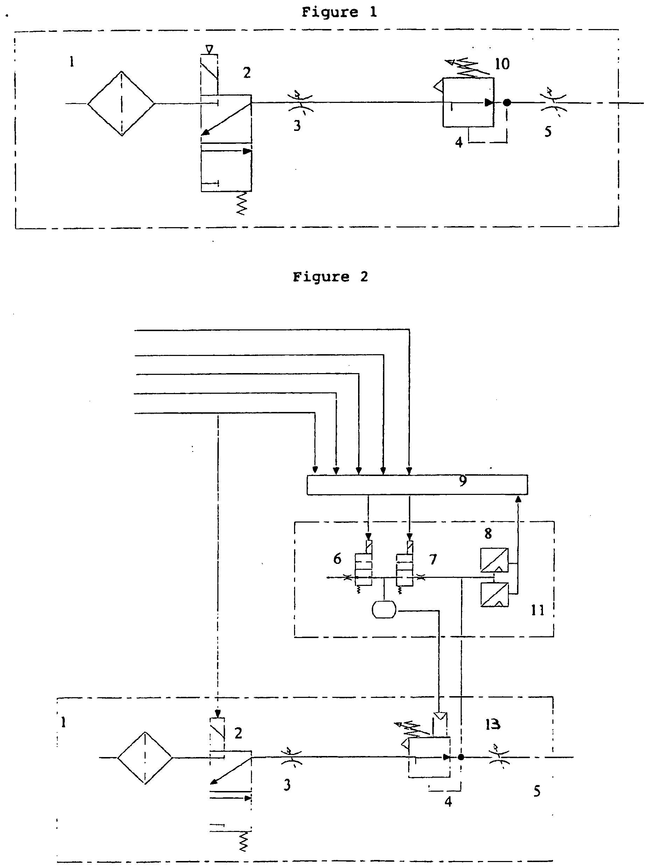

La figure 1 représente un schéma de principe d'un module de régulation habituellement mis en œuvre pour la commande de pantographe. Le pantographe 10 est actionné par un coussin pneumatique alimenté par l'intermédiaire d'un régulateur de pression 4. Le régulateur de pression est placé entre un régulateur de débit amont 3 et un régulateur de débit aval 5. Il assure une pression constante dans le coussin du pantographe. L'air filtré par l'élément 1 passe au travers du régulateur de débit 3 qui contrôle la vitesse de montée du pantographe. Une électrovalve 2 commande l'alimentation pneumatique du régulateur de pression 4.

Le régulateur de pression 4 est un régulateur à membrane, avec une légère fuite. On procède à un tarage initial à une pression de consigne par une action mécanique, par exemple par l'intermédiaire d'une vis de réglage agissant sur la membrane. Le régulateur de pression 4 maintient la pression constante, y compris lorsque les efforts exercées sur le coussin pneumatique ou sur le pantographe varient. Si le pantographe se déplace, le déplacement produit une variation de pression dans le coussin, ce qui entraîne une compensation par le régulateur. La précision du régulateur est d'environ 15 millibars.

L'ordre de montée du pantographe commande le basculement de l'électrovalve 2 qui devient passante.

Le régulateur de débit 5 contrôle la vitesse de descente du pantographe en cas de désexcitation de l'électrovalve 2.

Lorsque le pantographe fonctionne, le régulateur de pression doit garantir une pression précise et constante dans le coussin, quelles que soient les variations de volume de celui-ci. Ces variations sont engendrées par le pantographe qui oscille en suivant les variations de hauteur de la caténaire.

La pression de consigne du régulateur est ajustée à la valeur correspondant à l'effort statique du pantographe.

Elle est réglée par l'intermédiaire d'une vis qui agit sur un ressort situé à l'intérieur du régulateur.

L'invention consiste à piloter le régulateur de pression 4 par un étage de pilotage complémentaire qui permet de faire varier pneumatiquement la pression de consigne à partir d'un module de commande séparé.

La fonction de pilotage est assurée par un équipement composée de 2 modules :
- un module pneumatique de pilotage 11 ;
- une carte électronique 9.

Le module pneumatique de pilotage comporte deux micro-électrovalves 6 et 7, un ou deux transmetteur(s) de pression 8 et un réservoir 13.

Le module pneumatique de pilotage 11 mesure la pression en sortie du régulateur et alimente ou purge l'étage de pneumatique de pilotage du régulateur en fonction des consignes transmises par la carte électronique.

La carte électronique 9 reçoit les paramètres train suivants :
- demande de montée / descente du pantographe ;
- sens de circulation du train ;
- vitesse ;
- position du pantographe ;
- types de caténaires ;
- type de rame.

La carte électronique 9 et le module pneumatique 11 commandent l'ajustement du tarage autour d'une position initiale fixée mécaniquement. Le réglage fin est assuré par un bloc de mesure de pression à la sortie du régulateur (et à l'entrée du coussin), qui envoie un signal à un circuit comparateur à des données de consigne (type de rame, type de caténaire) pour échapper ou ajouter de l'air modifiant le tarage via deux vannes commandant seulement le faible débit du relais.

La carte électronique 9 traite ces informations conjointement à celles qui y sont préenregistrées en fonction des caractéristiques propres du pantographe, pour calculer la pression de consigne.

Elle compare la pression mesurée dans le coussin par le transmetteur de pression 8 à cette pression de consigne calculée.

En fonction de l'écart mesuré, elle commande l'excitation de l'électrovalve d'admission 7 ou le relâchement de l'électrovalve d'échappement 6. Le tarage de l'étage de régulation du régulateur 4 est alors issu de l'effort exercé par le ressort de tarage auquel s'ajoute l'effort pneumatique de pilotage issu de 6 et 7. Ainsi la pression de consigne est ajustée à la pression calculée. Le réservoir permet d'atténuer les variations d'amplitude de pression occasionnées par les actions des valves dans la chambre de pilotage et contribue ainsi à augmenter la précision de la régulation.

Pour des variations constantes (changement de dénivelé, de vitesse), variation de hauteur caténaires, le module régulateur agit directement.

Le circuit électronique filtre les variations de pression dont l'amplitude dépasse la précision du régulateur (environ 15 millibars). Les vannes sont excitées seulement lorsque la variation dépasse le seuil.

Un tel mode de fonctionnement ne serait pas possible avec des vannes pneumatiques proportionnelles car la précision du débit est insuffisante.

### Fonctionnement en mode secours

En cas de panne du module de pilotage ou de la carte électronique, la cde de pilotage se désactive et l'électrovalve 6 se met à la purge. Le pantographe fonctionne alors en mode dégradé avec la seule pression de consigne donnée par le ressort et correspondant à l'effort statique.

Ce dispositif de secours permet également de disposer d'une référence de pression correspondant à l'effort statique de chaque pantographe. Lors d'une procédure d'auto-tarage, cette valeur est prise en compte automatiquement, dans la carte électronique, comme référence pour le calcul de la pression de pilotage.

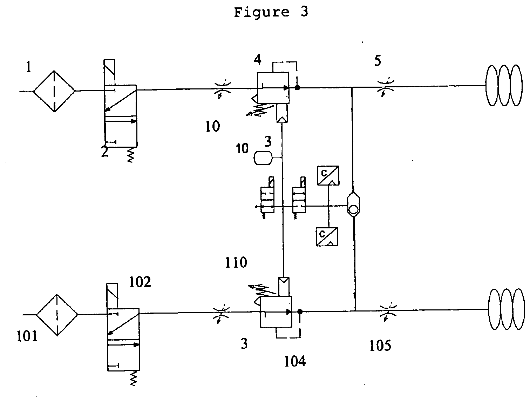

La figure 3 représente une variante de réalisation, pour le pilotage de deux pantographes.

Cette variante permet de piloter deux pantographes différents avec une carte électronique et un module de pilotage commun, pour les deux pantographes. Une vanne 12 alimente le régulateur 4 ou 104 du pantographe qui est actif.

## Revendications

1. Système comprenant au moins un pantographe (10) piloté actionnée par un coussin pneumatique alimenté par un circuit comprenant un régulateur de pression (4) garantissant une pression fonction d'une valeur de pression de consigne, le système de pantographe comportant un circuit électronique (9) recevant :
- un signal de pression fourni par un capteur (8) placé entre la sortie du régulateur et l'entrée du coussin pneumatique, et
- au moins un signal représentatif de la vitesse de la rame, **caractérisé en ce que** ledit régulateur de pression (4) comprend :
• un premier moyen d'ajustement mécanique de tarage de la valeur de la pression de consigne, et
• un second moyen d'ajustement (11) pneumatique de tarage distinct du premier moyen, pour la modification dynamique de la valeur de la pression de consigne de tarage,
ledit circuit (9) délivrant un signal de commande dudit second moyen d'ajustement.

2. Système selon la revendication 1, **caractérisé en ce que** la commande de la valeur d'ajustement est assurée par deux électrovalves (6, 7) commandées par ledit circuit électronique (9) pour commander pneumatiquement ledit second moyen d'ajustement (11).

3. Système selon la revendication 1 ou 2, **caractérisé en ce que** le circuit électronique (9) reçoit en outre une information provenant de la rame ou du réseau.

4. Système selon la revendication 3, **caractérisé en ce qu'**il comprend un capteur de géolocalisation transmettant au circuit électronique (9) un signal de géolocalisation.

5. Système selon la revendication 3, **caractérisé en ce qu'**il comprend un capteur de climatique transmettant au circuit électronique (9) un signal de température ou d'humidité.

6. Système selon la revendication 3, **caractérisé en ce qu'**il comprend un moyen de commande d'une pluralité de pantographes (10, 110).

7. Procédé de commande d'un pantographe (10) piloté actionné par un coussin pneumatique alimenté par un circuit comprenant un régulateur de pression (4) garantissant une pression fonction d'une valeur de pression de consigne, le système de pantographe comportant un circuit électronique (9) délivrant un signal de commande en fonction:
• d'un signal de pression fourni par un capteur (8) placé entre la sortie du régulateur et l'entrée du coussin pneumatique, et
• d'au moins un signal représentatif de la vitesse de la rame,
**caractérisé en ce qu'**il comporte une étape de tarage mécanique de la valeur de pression de consigne du régulateur de pression (4), et un ajustement électropneumatique de la valeur de pression de consigne dudit régulateur de pression, ledit ajustement étant commandé par un signal de commande délivré par le circuit électronique (9) délivrant un signal de commande dudit second moyen d'ajustement (11).

8. Procédé de commande selon la revendication 7, **caractérisé en ce que** la valeur de tarage ajustée à la valeur nominale déterminée pour une vitesse de rame nulle, en cas de défaillance du circuit de commande (9).

## Patentansprüche

1. System, umfassend mindestens einen gesteuerten Pantographen (10), der durch ein Luftkissen betätigt wird, das von einer Schaltung gespeist wird, die einen Druckregler (4) umfasst, der einen Druck als Funktion eines Drucksollwerts gewährleistet, wobei das Panthographsystem eine elektronische Schaltung (9) umfasst, die empfängt:
- ein Drucksignal, das von einem Sensor (8) geliefert wird, der zwischen dem Ausgang des Reglers und dem Eingang des Luftkissens platziert ist, und
- mindestens ein Signal, das für die Geschwindigkeit des Zugs repräsentativ ist,
**dadurch gekennzeichnet, dass** der Druckregler (4) umfasst:
• ein erstes mechanisches Einstellmittel zum Tarieren des Drucksollwerts, und
• ein zweites pneumatisches Einstellmittel (11) zum getrennten Tarieren des ersten Mittels zur dynamischen Modifikation des Drucksollwerts des Tarierens,
wobei die Schaltung (9) ein Steuersignal des zweiten Einstellmittels liefert.

2. System nach Anspruch 1,
**dadurch gekennzeichnet, dass** die Steuerung des Einstellwerts durch zwei Elektroventile (6, 7) sichergestellt ist, die von der elektronischen Schaltung (9) gesteuert werden, um das zweite Einstellmittel (11) pneumatisch zu steuern.

3. System nach Anspruch 1 oder 2,
**dadurch gekennzeichnet, dass** die elektronische Schaltung (9) außerdem eine Information empfängt, die von dem Zug oder dem Netz stammt.

4. System nach Anspruch 3,
**dadurch gekennzeichnet, dass** dieses einen Sensor zur Geolokalisation umfasst, der ein Geolokalisationssignal an die elektronische Schaltung (9) überträgt.

5. System nach Anspruch 3,
**dadurch gekennzeichnet, dass** dieses einen Klimasensor umfasst, der ein Temperatur- oder Feuchtigkeitssignal an die elektronische Schaltung (9) überträgt.

6. System nach Anspruch 3,
**dadurch gekennzeichnet, dass** dieses ein Steuermittel mehrerer Pantographen (10, 110) umfasst.

7. Verfahren zur Steuerung eines gesteuerten Pantographen (10), der durch ein Luftkissen betätigt wird, das von einer Schaltung gespeist wird, die einen Druckregler (4) umfasst, der einen Druck als Funktion eines Drucksollwerts gewährleistet, wobei das Panthographsystem eine elektronische Schaltung (9) umfasst, die ein Steuersignal liefert als Funktion:
• eines Drucksignals, das von einem Sensor (8) geliefert wird, der zwischen dem Ausgang des Reglers und dem Eingang des Luftkissens platziert wird, und
• mindestens eines Signals, das für die Geschwindigkeit des Zugs repräsentativ ist,
**dadurch gekennzeichnet, dass** dieses einen Schritt des mechanischen Tarierens des Drucksollwerts des Druckreglers (4) und eine elektropneumatische Einstellung des Drucksollwerts des Druckreglers umfasst, wobei die Einstellung von einem Steuersignal gesteuert wird, das von der elektronischen Schaltung (9) geliefert wird, die ein Steuersginal des zweiten Einstellmittels (11) liefert.

8. Steuerverfahren nach Anspruch 7,
**dadurch gekennzeichnet, dass** der angepasste Tarierwert an den nominalen Wert, der für eine Zuggeschwindigkeit von Null bestimmt wird, im Fall des Ausfalls der Steuerschaltung (9).

## Claims

1. System comprising at least one controlled pantograph (10) actuated by an air-cushion supplied by a circuit comprising a pressure regulator (4) that ensures a pressure as a function of a setpoint pressure value, the pantograph system comprising an electronic circuit (9) that receives:
- a pressure signal provided by a sensor (8) positioned between the outlet of the regulator and the inlet of the air-cushion, and
- at least one signal that is representative of the speed of the train set,
**characterized in that** said pressure regulator (4) comprises:
• a first mechanical adjustment means for calibrating the value of the setpoint pressure, and
• a second pneumatic calibrating adjustment means (11), distinct from the first means, for dynamically changing the value of the calibration setpoint pressure,
said circuit (9) sending a signal for controlling said second adjustment means.

2. System according to Claim 1, **characterized in that** the adjustment value is controlled by two solenoid valves (6, 7) controlled by said electronic circuit (9) in order to pneumatically control said second adjustment means (11).

3. System according to Claim 1 or 2, **characterized in that** the electronic circuit (9) also receives information from the train set or from the network.

4. System according to Claim 3, **characterized in that** it comprises a geolocation sensor which sends a geolocation signal to the electronic circuit (9).

5. System according to Claim 3, **characterized in that** it comprises a climate sensor which sends a temperature or humidity signal to the electronic circuit (9).

6. System according to Claim 3, **characterized in that** it comprises a means for controlling a plurality of pantographs (10, 110).

7. Control method for controlling a controlled pantograph (10) actuated by an air-cushion supplied by a circuit comprising a pressure regulator (4) that ensures a pressure as a function of a setpoint pressure value, the pantograph system comprising an electronic circuit (9) that sends a control signal as a function of:
• a pressure signal provided by a sensor (8) positioned between the outlet of the regulator and the inlet of the air-cushion, and
• at least one signal that is representative of the speed of the train set,
**characterized in that** it comprises a step of mechanically calibrating the value of the setpoint pressure of the pressure regulator (4), and electropneumatic adjustment of the setpoint pressure value of said pressure regulator, said adjustment being controlled by a control signal sent by the electronic circuit (9) sending a control signal to said second adjustment means (11).

8. Control method according to Claim 7, **characterized in that** the calibration value adjusted to the nominal value determined for a train set speed equal to zero, in the event of a fault in the control circuit (9).
